# EUROPÄISCHE PATENTSCHRIFT

(11) **EP 1 749 043 B1**
(45) Veröffentlichungstag und Bekanntmachung des Hinweises auf die Patenterteilung: **30.07.2008**
(21) Anmeldenummer: 05739541.0
(22) Anmeldetag: 23.04.2005
(51) Int. Cl.: C08G 64/30

(54) **COPOLYCARBONATE MIT VERBESSERTER FLIESSFÄHIGKEIT**
COPOLYCARBONATES WITH AN IMPROVED FLUIDITY
COPOLYCARBONATES A FLUIDITE AMELIOREE

(30) Priorität: 07.05.2004 DE 102004022673
(43) Veröffentlichungstag der Anmeldung: 07.02.2007
(73) Patentinhaber: Bayer MaterialScience AG, 51368 Leverkusen (DE)
(72) Erfinder: HEUER, Helmut-Werner, 47829 Krefeld (DE); WEHRMANN, Rolf, 47800 Krefeld (DE); ERKELENZ, Michael, 47239 Duisburg (DE); MEYER, Alexander, 40237 Düsseldorf (DE); MÖTHRATH, Melanie, 40223 Düsseldorf (DE)
(86) Internationale Anmeldenummer: PCT/EP2005/004383
(87) Internationale Veröffentlichungsnummer: WO 2005/113639

(56) Entgegenhaltungen:
- EP-A- 0 402 689
- DE-A1- 2 701 173
- US-A- 4 948 871
- DATABASE CA [Online] CHEMICAL ABSTRACTS SERVICE, COLUMBUS, OHIO, US; TOTANI, YOSHUKI ET AL: "Manufacture of aromatic polycarbonates in halogen-free solvents" XP002337120 gefunden im STN Database accession no. 124:262048 -& JP 08 003307 A (MITSUI TOATSU CHEMICALS, JAPAN) 9. Januar 1996 (1996-01-09)
- FACTOR A., LYNCH J.C., GREENBERG F.H.: "The Synthesis, Characterization, and Weathering Behavior of Polycarbonates derived from 3,3'-Dihydroxydiphenyl Ether" JOURNAL OF POLYMER SCIENCE: PART A: POLYMER CHEMISTRY, Bd. 25, 1987, Seiten 3413-3422, XP002335610 in der Anmeldung erwähnt

## Beschreibung

Gegenstand der vorliegenden Erfindung sind Copolycarbonate mit verminderter Wasseraufnahme und verbesserter Fließfähigkeit, Verfahren zu deren Herstellung und deren Verwendung zur Herstellung bestimmter Produkte sowie die daraus erhältlichen Produkte.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus.

Zur Gewinnung hochmolekularer Polycarbonate nach dem Phasengrenzflächenverfahren werden im Zweiphasengemisch die Alkalisalze von Bisphenolen mit Phosgen umgesetzt. Das Molekulargewicht kann durch die Menge an Monophenolen wie z.B. Phenol oder tert.-Butylphenol gesteuert werden. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Zur Herstellung von Polycarbonaten nach dem Phasengrenzflächenverfahren sei beispielhaft auf H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 verwiesen.

Zur Herstellung der Polycarbonate nach dem Schmelzumesterungsverfahren werden die Bisphenole mit Diarylcarbonaten, meist Diphenylcarbonat, in Anwesenheit von Katalysatoren, wie Alkalisalzen, Ammonium- oder Phosphoniumverbindungen, in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Die im Stand der Technik vorbeschriebenen Polycarbonate bzw. Copolycarbonate sind jedoch durch ihrer hohen Schmelzviskositäten unbefriedigend bzw. haben den Nachteil, dass sie beim Einsatz zur Herstellung von großflächigen Formkörpern, wie z. B. Autoscheiben, beschränkt oder nicht optimal geeignet sein können.

Es bestand daher die Aufgabe, Copolycarbonate und Verfahren zu deren Herstellung verfügbar zu machen, welche diese Nachteile vermeiden. Diese Aufgabe wird überraschenderweise durch den Einsatz einer oder mehrerer Verbindungen der allgemeinen Formel (1), 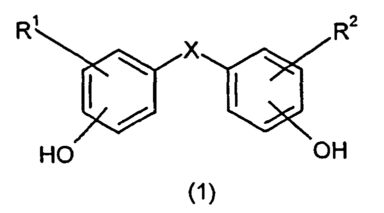 in welcher
- R¹ und R²: für Wasserstoff oder lineares oder verzweigtes C₁-C₁₀-Alkyl, bevorzugt für Wasserstoff oder lineares oder verzweigtes C₁-C₆ Alkyl, besonders bevorzugt für Wasserstoff oder lineares oder verzweigtes C₁-C₄ Alkyl, ganz besonders bevorzugt für Wasserstoff oder Methyl stehen und
- X: für O oder S steht.

Gegenstand der vorliegenden Erfindung sind daher Copolycarbonate enthaltend mindestens zwei verschiedene Bisphenole als Monomere, wobei ein Bisphenol ausgewählt ist aus mindestens einer der Verbindungen der Formel (1), 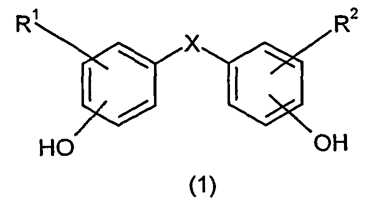 in welcher
- R¹ und R²: für Wasserstoff oder lineares oder verzweigtes C₁-C₁₀-Alkyl, bevorzugt für Wasserstoff oder lineares oder verzweigtes C₁-C₆ Alkyl, besonders bevorzugt für Wasserstoff oder lineares oder verzweigtes C₁-C₄ Alkyl, ganz besonders bevorzugt für Wasserstoff oder Methyl stehen und
- X: für O oder S steht.

Gegenstand der vorliegenden Erfindung sind weiterhin die Bisphenole der Verbindungen der Formel (1), 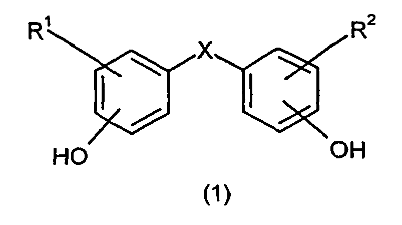 in welcher
- R¹ und R²: für Wasserstoff oder lineares oder verzweigtes C₁-C₁₀-Alkyl, bevorzugt für Wasserstoff oder lineares oder verzweigtes C₁-C₆ Alkyl, besonders bevorzugt für Wasserstoff oder lineares oder verzweigtes C₁-C₄ Alkyl, ganz besonders bevorzugt für Wasserstoff oder Methyl stehen und
- X: für O oder S steht.

Besonders bevorzugte Verbindungen der Formel (1) sind Verbindungen der Formeln (1a) und (1b), 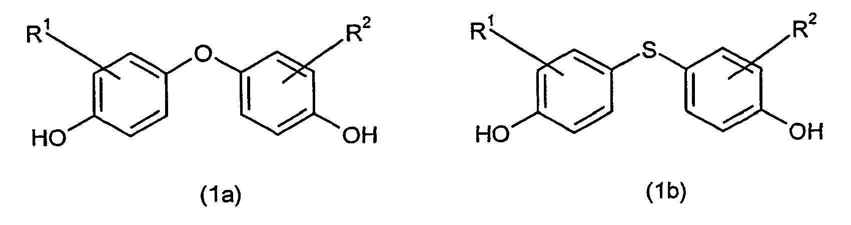 in welchen
- R¹ und R²: die oben genannte Bedeutung haben.

Ganz besonders bevorzugt sind die Verbindungen, die mit den Formeln (1c) und (1d) beschrieben werden:

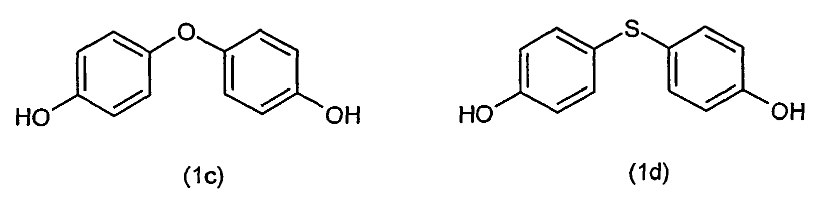

Überraschenderweise wurde dabei gefunden, dass die Schmelzviskosität der erhaltenen Copolycarbonate sowohl bei niedrigen als auch höheren Scherraten niedrigere Werte als der Stand der Technik aufweisen (bei ansonsten vergleichbarem Molekulargewicht). Dies ist besonders für die Herstellung von größeren Spritzgußteilen, wie z.B. Autoscheiben, von Bedeutung. Dadurch ist eine leichtere Befüllung der Formen mit gängigen Spritzgußmaschinen möglich.

Die erfindungsgemäß einzusetzenden Diphenole der Formel (1a) sind in der Literatur bekannt. Die Herstellung dieser Substanzen ist beispielsweise in DE-A 22 37 762, DE-A 35 32 881, JP-A 2002 16 73 49 und JP-A 2003 16 05 26 beschrieben. Die Eigenschaften dieses Homopolycarbonats sind in H. Schnell, Chemistry and Physics of Polycarbonates, Polymer Reviews, Vol. 9, Interscience Publishers, New York 1964 S. 99 ff. beschrieben.

Die Herstellung von 3,3'-Dihydroxydiphenylether ist beispielsweise in Journal of Polymer Science, Part A, 1987, 25 (12), S. 3413-3422 beschrieben.

Die Herstellung von 3,4'-Dihydroxydiphenylether ist beispielsweise in JP-A 53 07 70 28 beschrieben.

Prinzipiell lassen sich die 4,4'-Hydroxy-substituierten Diphenylether oder Diphenyletherderivate durch Dimerisierung von Hydrochinon oder substituierten Hydrochinonderivaten herstellen. Hierbei werden die Reaktionspartner unter Anwesenheit eines Katalysators wie z.B. eines sauren Ionentauschers zur Reaktion gebracht. Eine weitere Möglichkeit ist die Umsetzung Halogensubsubstituierter Phenole in einer modifizierten Ullmann Reaktion. Hierbei werden die Reaktionspartner unter Einwirkung von Kupfersalzen wie z.B. CuCl zur Reaktion gebracht. Auf diese Weise sind z.B. auch die meta-verknüpften Derivate zugänglich.

Die besonders bevorzugten Verbindungen sind bekannt (z. B. in A. Riemann, W. Ude, Ger. Offen. (1986), DE-A 3506845 oder in Y. Kawamorita, M. Hisamura, Jpn. Kokai Tokkyo Koho (1988), JP-A 63136051). Über die Verbesserung der Fließfähigkeit entsprechender Copolycarbonate lehrt der Stand der Technik dagegen nichts.

Der Anteil der erfindungsgemäßen Bisphenole im Copolycarbonat beträgt im Allgemeinen 0,1-40 mol-%, bevorzugt 1-30 mol-%, besonders bevorzugt 5-25 mol-% und ganz besonders bevorzugt 10-20 mol-%, bezogen auf die molare Menge der aromatischen Dihydroxy-Verbindungen, die für die Herstellung der Copolycarbonate verwendet werden.

Die unter Verwendung der beschriebenen Bisphenole der Formel (1) hergestellten Copolycarbonate, enthaltend die von den Verbindungen der Formeln 1 abgeleiteten Struktureinheiten -O-D-O-, werden beispielhaft aber nicht ausschließlich durch die allgemeine Formel (2) dargestellt, 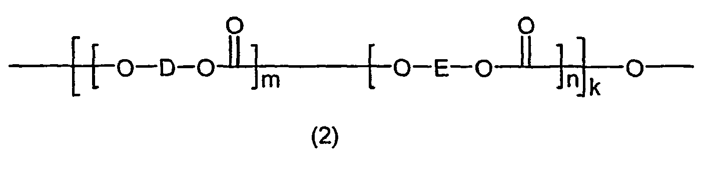 worin der Rest O-E-O für beliebige Diphenolatreste steht, wobei Diphenolate basierend auf den Dihydroxy-Verbindungen der Formel (1) ausgenommen sind,
in denen
-E- unabhängig voneinander für einen aromatischen Rest mit 6 bis 40 C-Atomen stehen, bevorzugt 6 bis 35 C-Atome, besonders bevorzugt 6 bis 30 C-Atomen und ganz besonders bevorzugt 6 bis 25 C-Atomen, der einen oder mehrere aromatische oder kondensierte, gegebenenfalls Heteroatome enthaltende aromatische Kerne enthalten kann und mit C₁-C₁₂-Alkylresten, bevorzugt mit C₁-C₁₀-Alkylresten, besonders bevorzugt mit C₁-C₈-Alkylresten und ganz besonders bevorzugt mit C₁-C₆-Alkylresten oder Halogen, bevorzugt Fluor, Chlor oder Brom, besonders bevorzugt Fluor oder Chlor, ganz besonders bevorzugt Fluor substituiert sein kann, und aliphatische Reste, cycloaliphatische Reste, aromatische Kerne oder Heteroatome als Brückenglieder enthalten kann
und
- k: für eine ganze Zahl von 1 bis 1000, bevorzugt von 1 bis 800, besonders bevorzugt von 5 bis 600 und ganz besonders bevorzugt von 10 bis 500 und insbesondere bevorzugt von 15 bis 300 steht,
- m: für eine Bruchzahl z/k und n für eine Bruchzahl (k-z)/k steht wobei z für Zahlen von 1 bis k steht.

Bevorzugte Diphenolateinheiten der erfindungsgemäßen verzweigten Copolycarbonate leiten sich von allgemeinen Strukturen der Formel (3) ab, 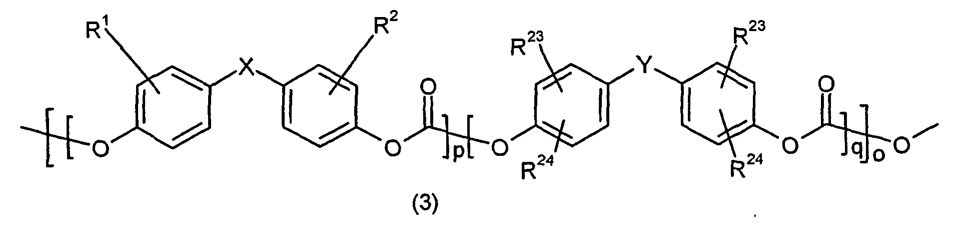 wobei in der Klammer die zugrunde liegenden Diphenolatreste beschrieben sind,
in denen
- R²³ und R²⁴: unabhängig voneinander für H, lineares oder verzweigtes C₁-C₁₈-Alkyl- oder Alkoxyreste, Halogen wie Cl oder Br oder für einen gegebenenfalls substituierten Aryl- oder Aralkylrest, bevorzugt für H oder lineare oder verzweigte C₁-C₁₂-Alkyl-, besonders bevorzugt für H oder C₁-C₈-Alkylreste und ganz besonders bevorzugt für H oder Methyl stehen,
- R¹ und R²: für lineares oder verzweigtes C₁-C₁₀-Alkyl stehen, bevorzugt für lineares C₁-C₁₀-Alkyl, besonders bevorzugt für lineares C₁-C₈-Alkyl und ganz besonders bevorzugt für lineares C₁-C₆-Alkyl und
- X: für O oder S steht,
- Y: für eine Einfachbindung, -SO₂-, -CO-, einen C₁- bis C₆-Alkylen-, C₂- bis C₅-Alkyliden-, C₅- bis C₆-Cycloallylidenrest, der mit C₁- bis C₆-Alkyl, vorzugsweise Methyl- oder Ethylresten substituiert sein kann, oder einen C₆- bis C₁₂-Arylenrest, steht,
und
- o: für eine ganze Zahl von 1 bis 1000, bevorzugt von 1 bis 800 besonders bevorzugt von 5 bis 600 und ganz besonders bevorzugt von 10 und 500 und insbesondere bevorzugt von 15 bis 300 steht,
und
- p: für eine Bruchzahl z/o und q für eine Bruchzahl (o-z)/o steht wobei z für Zahlen von 1 bis o steht.

Besonders bevorzugt leiten sich die Diphenolatreste O-E-O in Formel (2) sowie die Diphenolatreste des mit q als subscript indizierten Teils in Formel (3) von den im folgenden noch genannten, geeigneten Diphenolen ab.

Beispielhaft werden für die Diphenole, die neben den genannten Bisphenolen den allgemeinen Formeln (2) und (3) zugrundeliegen, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω- Bis-(hydroxyphenyl)-polysiloxane genannt.

Bevorzugte Diphenole sind beispielsweise 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD) 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Insbesondere ganz besonders bevorzugt sind 2,2-Bis-(4-hydroxyphenyl)-propan (Bisphenol A) und 1,1-Bis-(4-hydroxyphenyl)-3,3,5-trimethylcyclohexan (Bisphenol TMC).

Die Diphenole können sowohl allein als auch im Gemisch miteinander verwendet werden; es sind sowohl Homopolycarbonate als auch Copolycarbonate einbezogen. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Die Polycarbonate bzw. Copolycarbonate können auch verzweigt sein. Hierzu werden bestimmte geringe Mengen, vorzugsweise Mengen zwischen 0.05 und 5 Mol-%, besonders bevorzugt 0,1-3 Mol-%, ganz besonders bevorzugt 0,1-2 Mol-%, bezogen auf die Mole eingesetzter Diphenole, an trifunktionellen Verbindungen wie z.B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthal-säureester; Tetra-(4-hydroxyphenyl)-methan; Tetra-(4-(4-hydroxyphenyl-isopropyl)-phenoxy)-methan; α, α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere 1,1,1-Tri-(4-hydroxyphenyl)-ethan und Bis-(3-methyl-4-hydroxyphenyl)-2-oxo-2,3-dihydroindol als sogenannte Verzweiger, eingesetzt. Bevorzugt werden Isatinbiskresol sowie 1,1,1-Tri-(4-hydroxyphenyl)-ethan und Bis-(3-methyl-4-hydroxyphenyl)-2-oxo-2,3-dihydroindol als Verzweiger eingesetzt.

Durch den Einsatz dieser Verzweiger ergeben sich verzweigte Strukturen. Die resultierende Langkettenverzweigung führt meist zu rheologischen Eigenschaften der erhaltenen Polycarbonate, die sich in einer Strukturviskosität im Vergleich zu linearen Typen äußert.

Die vorliegende Erfindung betrifft weiterhin ein Verfahren zur Herstellung der erfindungsgemäßen Copolycarbonate der Formeln (2) und (3), dadurch gekennzeichnet, dass Bisphenole und evtl. Verzweiger in wässriger alkalischer Lösung gelöst werden und mit einer ggf. in einem Lösemittel gelösten Carbonatquelle wie Phosgen in einem Zweiphasengemisch aus einer wässrigen alkalischen Lösung, einem organischen Lösemittel und einem Katalysator, bevorzugt einer Aminverbindung, zur Reaktion gebracht werden. Die Reaktionsführung kann auch mehrstufig erfolgen. Solche Verfahren zur Herstellung von Polycarbonat sind als Zweiphasengrenzflächenverfahren grundsätzlich z.B. aus H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 bekannt und die grundlegenden Bedingungen daher dem Fachmann geläufig.

Die Konzentration der Bisphenole in der wässrigen alkalischen Lösung beträgt dabei 2 bis 25 Gew.-%, bevorzugt 2 bis 20 Gew.-% besonders bevorzugt 2 bis 18 Gew.-% und ganz besonders bevorzugt 3 bis 15 Gew.-%. Die wässrige alkalische Lösung besteht aus Wasser, in dem Hydroxide von Alkali- oder Erdalkalimetallen gelöst sind. Bevorzugt sind Natrium- und Kaliumhydroxide.

Bei der Verwendung von Phosgen als Carbonatquelle beträgt das Volumenverhältnis wässrige alkalische Lösung zu organischem Lösemittel 5:95 bis 95:5 bevorzugt 20:80 bis 80:20, besonders bevorzugt 30:70 bis 70:30 und ganz besonders bevorzugt 40:60 bis 60:40. Das Molverhältnis Bisphenol zu Phosgen ist kleiner als 1:10, bevorzugt kleiner als 1:6 besonders bevorzugt kleiner als 1:4 und ganz besonders bevorzugt kleiner als 1:3. Die Konzentration der erfindungsgemäßen verzweigten Polycarbonate und Copolycarbonate in der organischen Phase beträgt 1,0 bis 25 Gew.-% bevorzugt 2 bis 20 Gew.-%, besonders bevorzugt 2 bis 18 Gew.-% und ganz besonders bevorzugt 3 bis 15 Gew.-%.

Die Konzentration der Aminverbindung beträgt bezogen auf die eingesetzte Bisphenolmenge 0,1 bis 10 mol % bevorzugt 0,2 bis 8 mol % besonders bevorzugt 0,3 bis 6 mol % und ganz besonders bevorzugt 0,4 bis 5 mol %.

Unter Bisphenolen sind die o. g. Diphenole, mit Anteilen der oben genannten Verzweiger, zu verstehen. Bei der Carbonatquelle handelt es sich um Phosgen, Diphosgen oder Triphosgen, bevorzugt um Phosgen. Für den Fall, dass Phosgen eingesetzt wird, kann ggf. auf ein Lösemittel verzichtet und das Phosgen direkt in das Reaktionsgemisch eingeleitet werden.

Als Katalysator können tertiäre Amine wie Triethylamin oder N-Alkylpiperidine eingesetzt werden. Als Katalysatoren geeignet sind Trialkylamine und 4-(Dimethylamino)pyridin. Besonders geeignet sind Triethylamin, Tripropylamin, Triisopropylamin, Tributylamin, Triisobutylamin, N-Methylpiperidin, N-Ethylpiperidin, und N-Propylpiperidin.

Als organisches Lösemittel kommen halogenierte Kohlenwasserstoffe wie Methylenchlorid und /oder Chlorbenzol, Dichlorbenzol, Trichlorbenzol oder Gemische davon oder aromatische Kohlenwasserstoffe, wie z.B. Toluol oder Xylole in Frage.

Die Reaktionstemperatur kann -5°C bis 100°C, bevorzugt 0°C bis 80°C, besonders bevorzugt 10°C bis 70°C und ganz besonders bevorzugt 10°C bis 60°C betragen.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert Kohlensäurediester im Sinne der Erfindung sind solche der Formel (4) und (5) 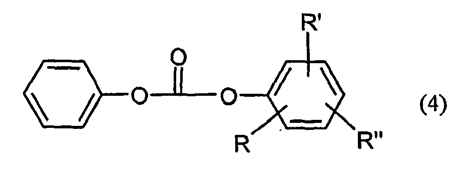 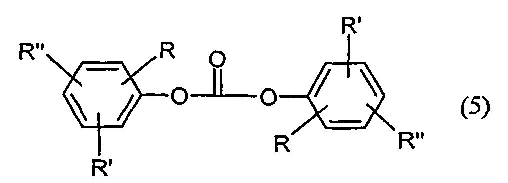 wobei
- R, R' und R": unabhängig voneinander H, C₁-C₃₄-Alkyl oder C₅-C₁₀-Cycloalkyl, C₇-C₃₄-Alkaryl oder C₆-C₃₄-Aryl darstellen können, C₁-C₁₅-Alkyl, C₅- oder C₆-Cycloalkyl,
bevorzugt unabhängig voneinander H, C₁-C₁₆-Alkyl oder C₅-C₆-Cycloalkyl, C₇-C₁₆-Alkaryl oder C₆-C₁₆-Aryl darstellen, besonders bevorzugt stellen R, R' und R" H dar.

### Beispielhaft seien genannt:

Diphenylcarbonat, Butylphenyl-phenylcarbonat, Di-Butylphenylcarbonat,Isobutylphenyl-phenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)-carbonat, Tritylphenyl-phenylcarbonat, Di-Tritylphenylcarbonat,
bevorzugt

Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat,
besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (6) 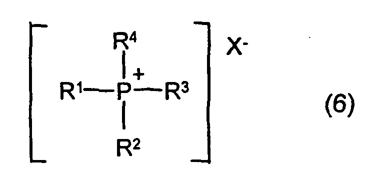 wobei
- R¹⁻⁴: unabhängig voneinander für C₁-C₁₀-Alkyl, C₆-C₁₀-Aryl, C₇-C₁₀-Aralkyl oder C₅-C₆-Cycloalkyl, bevorzugt Methyl oder C₆-C₁₄-Aryl, besonders bevorzugt Methyl oder Phenyl stehen, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR ist, wobei R C₆-C₁₄-Aryl oder C₇-C₁₂-Aralkyl, bevorzugt Phenyl, sein kann.

Bevorzugte Katalysatoren sind Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, besonders bevorzugt von 10⁻⁷ bis 10⁻⁴ mol, bezogen auf ein mol Bisphenol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 - 250°C, bevorzugt 100 - 230°C, besonders bevorzugt 120 - 190°C unter normalem Druck in 0 - 5 Stunden, bevorzugt 0,25 - 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 - 320°C, bevorzugt 270 - 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/ Erdalkalimetallkatalysatoren kann es vorteilhaft sein, die Alkali-/Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Die mittleren Molekulargewichte (M̅w) der erfindungsgemäßen verzweigten Polycarbonate und Copolycarbonate liegen im Bereich von 6 000 bis 200 000 g/mol, bevorzugt zwischen 6 000 und 100 000 g/mol besonders bevorzugt zwischen 10 000 und 80 000 g/mol und ganz besonders bevorzugt zwischen 12 000 und 70 000 g/mol (bestimmt mittels GPC und Polycarbonateichung).

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen Copolycarbonate können in bekannter Weise aufgearbeitet und zu beliebigen Formkörpern verarbeitet werden, beispielsweise durch Extrusion, Spritzguss oder Extrusionsblasformen.

Den erfindungsgemäßen Copolycarbonaten können noch andere aromatische Polycarbonate und/oder andere aromatische Polyestercarbonate und/oder andere aromatische Polyester in bekannter Weise zugemischt werden, beispielsweise durch Compoundierung.

Den erfindungsgemäßen Polycarbonaten und Copolycarbonaten können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z.B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15-25, und in den entsprechenden Kapiteln des "Plastics Additives Handbook" , ed. Hans Zweifel, 5th Edition 2000, Hanser Publishers, Munich. beschrieben).

Die erfindungsgemäßen Polycarbonate und Copolycarbonate, gegebenenfalls in Abmischung mit anderen Thermoplasten und/oder üblichen Additiven, können zu beliebigen Formkörpern/Extrudaten verarbeitet überall dort eingesetzt werden, wo bereits bekannte Polycarbonate, Polyestercarbonate und Polyester eingesetzt werden. Aufgrund ihres Eigenschaftsprofils eignen sie sich insbesondere als Materialien für den Spritzguß von größeren Formteilen, beispielsweise Autoscheiben. Sie sind aber auch beispielsweise als Formteile im Fahrzeugbau und als Platten für Abdeckungen im Sicherheitsbereich einsetzbar. Weitere mögliche Anwendungen der erfindungsgemäßen Polycarbonate sind:
1. Sicherheitsscheiben, die bekanntlich in vielen Bereichen von Gebäuden, Fahrzeugen und Flugzeugen erforderlich sind.
2. Herstellung 1 bis 5 Gallon Wasserflaschen.
3. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
4. Zur Herstellung von Ampelgehäusen oder Verkehrsschildern.
5. Herstellung von Mobiltelefongehäusen mit verbesserter Beständigkeit gegenüber Parfüm, Rasierwasser und Hautschweiß.
6. Zur Herstellung von Scheinwerferlampen, als sogenannte "head-lamps", Streulichtscheiben.
7. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.

Die Formkörper und Extrudate aus den erfindungsgemäßen Polymeren sind ebenfalls Gegenstand dieser Anmeldung.

Die nachfolgenden Beispiele sollen die Erfindung illustrieren ohne sie jedoch einzuschränken.

### Beispiele

### Beispiel 1

### Synthese eines Copolycarbonats aus Bisphenol A / 4,4'-Dihydroxydiphenylether (Molverhältnis 50:50):

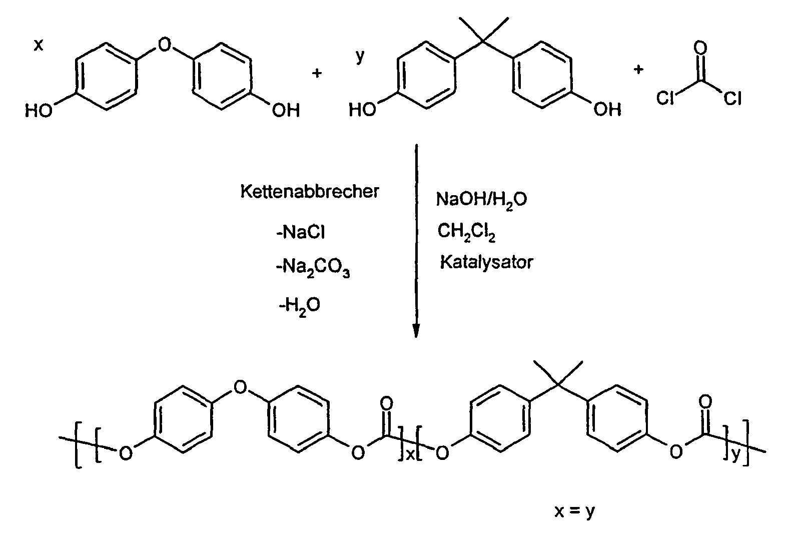

Zu einer mit Stickstoff inertisierten Lösung von 8,088 g (0,04 mol) 4,4'-Dihydroxydiphenylether und 9,132 g (0,04 mol) Bisphenol A sowie 7,04 g (0,176 mol) Natriumhydroxid in 126 ml Wasser werden 126 ml Methylenchlorid hinzugegeben. Bei einer einstufigen Fahrweise gibt man 0,42 g (0,0028 mol bzw. 3,5 mol-% bzgl. Bisphenol) p-tert.-Butylphenol (BUP) als Kettenabbrecher hinzu. Bei einem pH-Wert von 14 und Raumtemperatur v gibt man im Verlauf von 10 Minuten 11 ml (15,8 g, 0,16 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,11 ml (0,0008 mol, 1 mol% bzgl. Bisphenol) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 5,76 g Polycarbonat.

### Analytik:

- relative Lösungsviskosität in Methylenchlorid bei 25°C (0,5 g/100 ml Lösung): 1,176/1,176.
- GPC (Kalibrierung gegen BPA-Polycarbonat): Molekulargewicht M̅w=13964, M̅n=7897, Uneinheitlichkeit D=1,77)
- Glastemperatur T_{g}: 136°C

### Beispiel 2

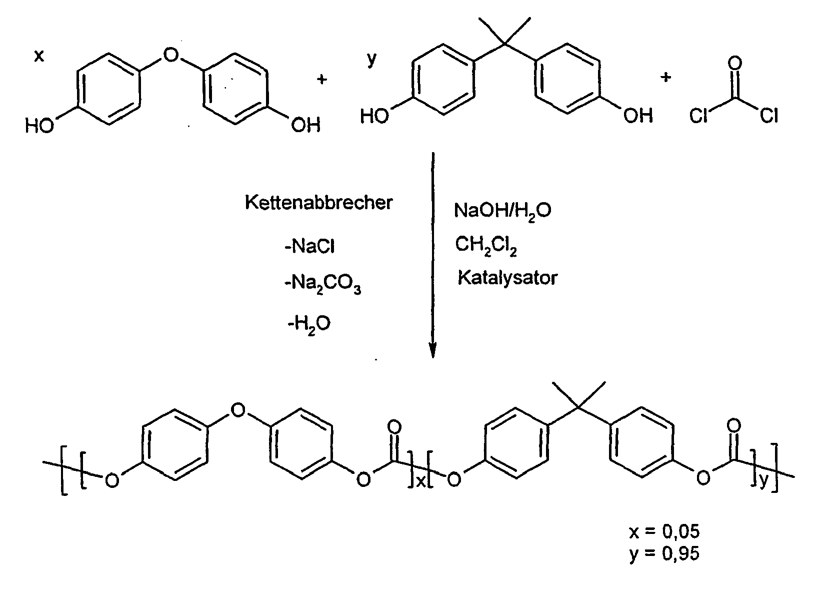

### Synthese eines Copolycarbonats aus Bisphenol A / 4,4'-Dihydroxydiphenylether (Molverhältnis 95:5):

Zu einer mit Stickstoff inertisierten Lösung von 0,809 g (0,004 mol) 4,4'-Dihydroxydiphenylether und 17,35 g (0,076mol) Bisphenol A sowie 7,04 g (0,176 mol) Natriumhydroxid in 131 ml Wasser werden 131 ml Methylenchlorid hinzugegeben. Bei einer einstufigen Fahrweise gibt man 0,36 g (0,0024 mol bzw. 3,0 mol-% bzgl. Bisphenol) p-tert.-Butylphenol (BUP) als Kettenabbrecher hinzu. Bei einem pH-Wert von 14 und Raumtemperatur v gibt man im Verlauf von 10 Minuten 11 ml (15,8 g, 0,16 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,11 ml (0,0008 mol, 1 mol-% bzgl. Bisphenol) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 19,0 g Polycarbonat.

Analytik:
- relative Lösungsviskosität in Methylenchlorid bei 25°C (0,5 g/100 ml Lösung): 1,339 / 1,338.
- GPC (Kalibrierung gegen BPA-Polycarbonat): Molekulargewicht M̅w=33509, M̅n=13308, Uneinheitlichkeit D=2,52)
- Glastemperatur Tg: 150°C

### Beispiel 3

### Synthese eines Copolycarbonats aus Bisphenol A / 4,4'-Dihydroxydiphenylether (Molverhältnis 90:10):

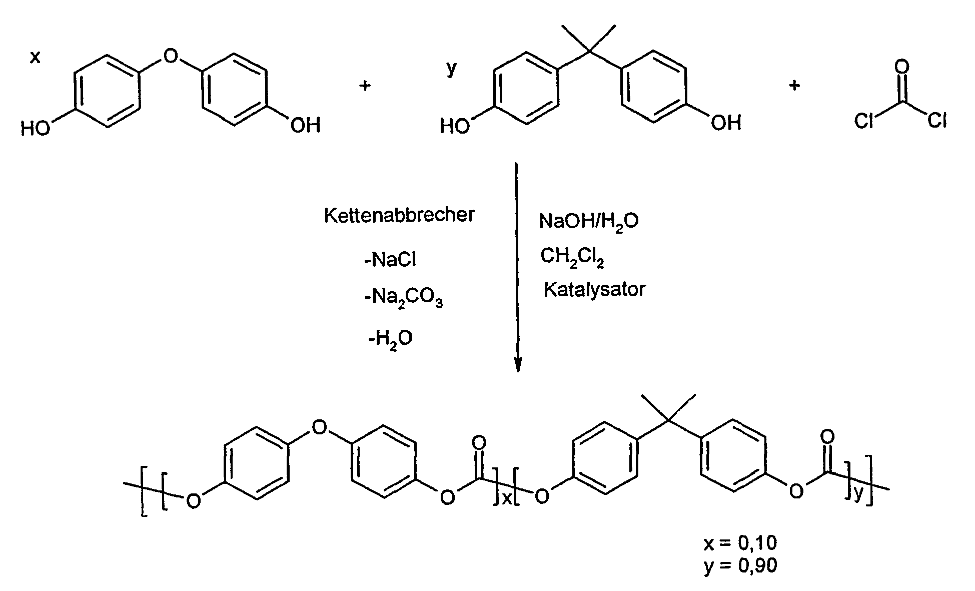

Zu einer mit Stickstoff inertisierten Lösung von 1,618 g (0,008 mol) 4,4'-Dihydroxydiphenylether und 16,438 g (0,072mol) Bisphenol A sowie 7,04 g (0,176 mol) Natriumhydroxid in 131 ml Wasser werden 131 ml Methylenchlorid hinzugegeben. Bei einer einstufigen Fahrweise gibt man 0,36 g (0,0024 mol bzw. 3,0 mol-% bzgl. Bisphenol) p-tert.-Butylphenol (BUP) als Kettenabbrecher hinzu. Bei einem pH-Wert von 14 und Raumtemperatur v gibt man im Verlauf von 10 Minuten 11 ml (15,8 g, 0,16 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,11 ml (0,0008 mol, 1 mol-% bzgl. Bisphenol) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 17,29 g Polycarbonat.

### Analytik:

- relative Lösungsviskosität in Methylenchlorid bei 25°C (0,5 g/100 ml Lösung): 1,301/1,303.
- GPC (Kalibrierung gegen BPA-Polycarbonat): Molekulargewicht M̅w=29570, M̅n=13904, Uneinheitlichkeit D=2,13)
- Glastemperatur T_{g}: 151 °C

### Beispiel 4

Synthese eines Copolycarbonats aus Bisphenol TMC / 4,4'-Dihydroxydiphenylether (Molverhältnis 50:50):

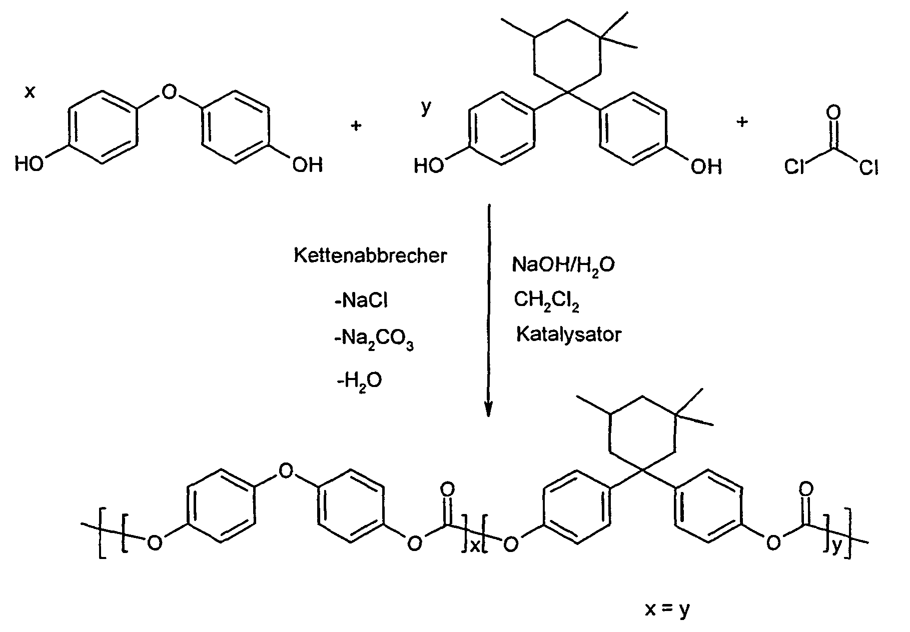

Zu einer mit Stickstoff inertisierten Lösung von 7,077 g (0,035 mol) 4,4'-Dihydroxydiphenylether und 10,87 g (0,035 mol) Bisphenol TMC sowie 6,16 g (0,154 mol) Natriumhydroxid in 130 ml Wasser werden 130 ml Methylenchlorid hinzugegeben. Bei einer einstufigen Fahrweise gibt man 0,368 g (0,0024 mol bzw. 3,5 mol-% bzgl. Bisphenol) p-tert.-Butylphenol (BUP) als Kettenabbrecher hinzu. Bei einem pH-Wert von 14 und Raumtemperatur v gibt man im Verlauf von 10 Minuten 9,7 ml (13,8 g, 0,14 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,10 ml (0,0007 mol, 1 mol-% bzgl. Bisphenol) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 14,08 g Polycarbonat.

### Analytik:

- relative Lösungsviskosität in Methylenchlorid bei 25°C (0,5 g/100 ml Lösung): 1,223/1,223
- GPC (Kalibrierung gegen BPA-Polycarbonat): Molekulargewicht M̅w=22962, M̅n=10974, Uneinheitlichkeit D=2,01)
- Glastemperatur Tg: 199°C

### Beispiel 5

### Synthese eines Copolycarbonats aus 4,4'-Dihydroxydiphenylether / 4,4'-Dihydroxybiphenyl (Molverhältnis 93:7):

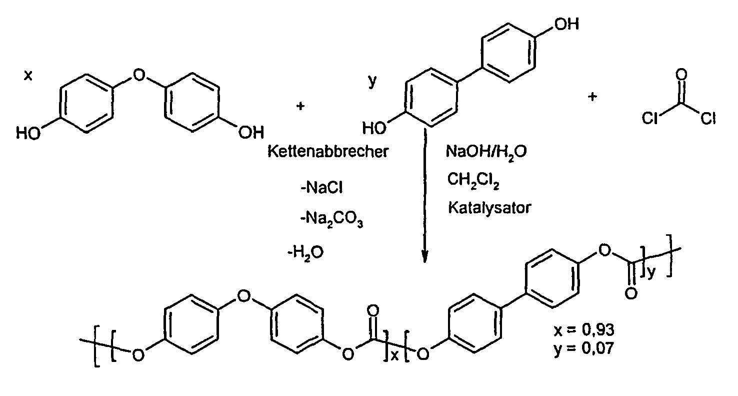

Zu einer mit Stickstoff inertisierten Lösung von 12,71 g (0,063 mol) 4,4'-Dihydroxydiphenylether und 0,93 g (0,005 mol) 4,4'-Dihydroxybiphenyl (DOD) sowie 4,4 g (0,111 mol) Natriumhydroxid in 406 ml Wasser werden 406 ml Methylenchlorid hinzugegeben. Bei einer einstufigen Fahrweise gibt man 0,263 g (0,00175 mol bzw. 3,5 mol% bzgl. Bisphenol) p-tert.-Butylphenol (BUP) als Kettenabbrecher hinzu. Bei einem pH-Wert von 14 und Raumtemperatur v gibt man im Verlauf von 10 Minuten 6,9 ml (9,88 g, 0,099 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,07 ml (0,0005 mol, 1 mol% bzgl. Bisphenol) n-Ethylpiperidin als Katalysator zu und läßt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 7,57 g Polycarbonat.

### Analytik:

- GPC (Kalibrierung gegen BPA-Polycarbonat): Molekulargewicht M̅w=52173, M̅n=16921, Uneinheitlichkeit D=3,08)
- Glastemperatur T_{g}: 120°C

### Beispiel 6

### Synthese eines Copolycarbonats aus 4,4'-Dihydroxydiphenylether / 4,4'-Dihydroxybiphenyl (Molverhältnis 80:20):

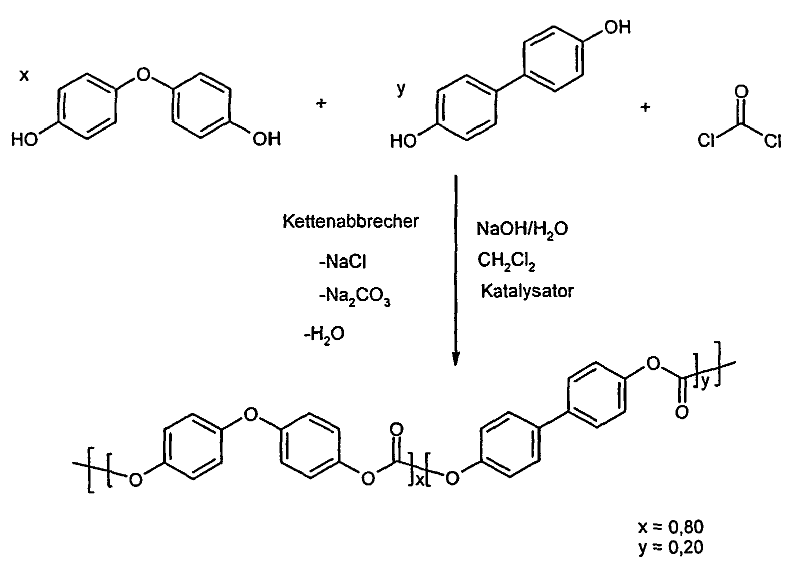

Zu einer mit Stickstoff inertisierten Lösung von 8,088 g (0,04 mol) 4,4'-Dihydroxydiphenylether und 1,826 g (0,01 mol) 4,4'-Dihydroxybiphenyl (DOD) sowie 4,4 g (0,111 mol) Natriumhydroxid in 220 ml Wasser werden 220 ml Methylenchlorid hinzugegeben. Bei einer einstufigen Fahrweise gibt man 0,263 g (0,00175 mol bzw. 3,5 mol-% bzgl. Bisphenol) p-tert.-Butylphenol (BUP) als Kettenabbrecher hinzu. Bei einem pH-Wert von 14 und Raumtemperatur v gibt man im Verlauf von 10 Minuten 6,9 ml (9,88 g, 0,099 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,07 ml (0,0005 mol, 1 mol% bzgl. Bisphenol) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 8,55 g Polycarbonat.

### Analytik:

- GPC (Kalibrierung gegen BPA-Polycarbonat): Molekulargewicht M̅w=38705, M̅n =16976, Uneinheitlichkeit D=2,28)
- Glastemperatur Tg: 114 °C
- Außerdem flüssigkristallines Verhalten: Phasenumwandlung ab 190°C

### Beispiel 7

### Synthese eines Copolycarbonats aus 4,4'-Dihydroxydiphenylether / 4,4'-Dihydroxybiphenyl (Molverhältnis 70:30):

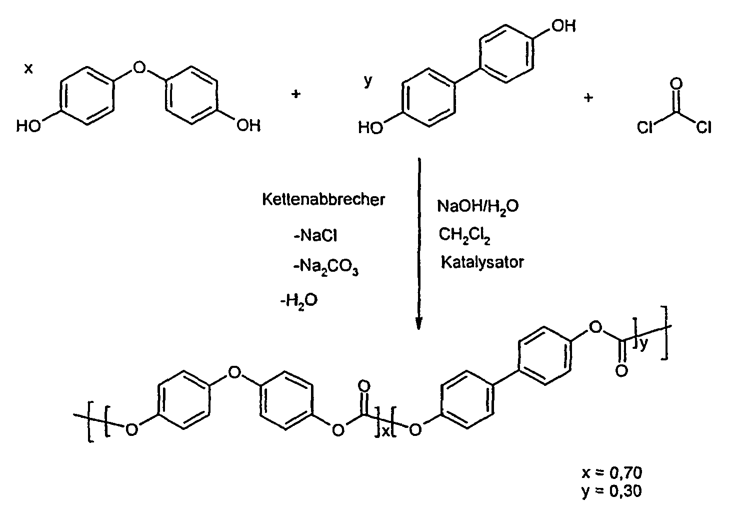

Zu einer mit Stickstoff inertisierten Lösung von 7,077 g (0,035 mol) 4,4'-Dihydroxydiphenylether und 2,793 g (0,015 mol) 4,4'-Dihydroxybiphenyl (DOD) sowie 4,4 g (0,111 mol) Natriumhydroxid in 220 ml Wasser werden 220 ml Methylenchlorid hinzugegeben. Bei einer einstufigen Fahrweise gibt man 0,263 g (0,00175 mol bzw. 3,5 mol-% bzgl. Bisphenol) p-tert.-Butylphenol (BUP) als Kettenabbrecher hinzu. Bei einem pH-Wert von 14 und Raumtemperatur v gibt man im Verlauf von 10 Minuten 6,9 ml (9,88 g, 0,099 mol) Phosgen hinzu. Um den pH-Wert nicht unter 12 fallen zu lassen, wurde während der Phosgenierung 25 %-ige Natronlauge zugegeben. Nach beendeter Phosgenierung und Spülung mit Stickstoff gibt man 0,07 ml (0,0005 mol, 1 mol-% bzgl. Bisphenol) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach dem Ausfällen des Polymers in Methanol und Trocknung erhält man 8,7 g Polycarbonat.

### Analytik:

- relative Lösungsviskosität in Methylenchlorid bei 25°C (0,5 g/100 ml Lösung): 1,460 / 1,461
- GPC (Kalibrierung gegen BPA-Polycarbonat): Molekulargewicht M̅w=35163, M̅n=16189, Uneinheitlichkeit D=2,17)
- Glastemperatur T_{g}: 106°C
- Außerdem flüssigkristallines Verhalten: Phasenumwandlung ab 200°C

### Beispiel 8

### Synthese eines Copolycarbonats aus Bisphenol A / 4,4'-Dihydroxydiphenylether (Molverhältnis 95:5):

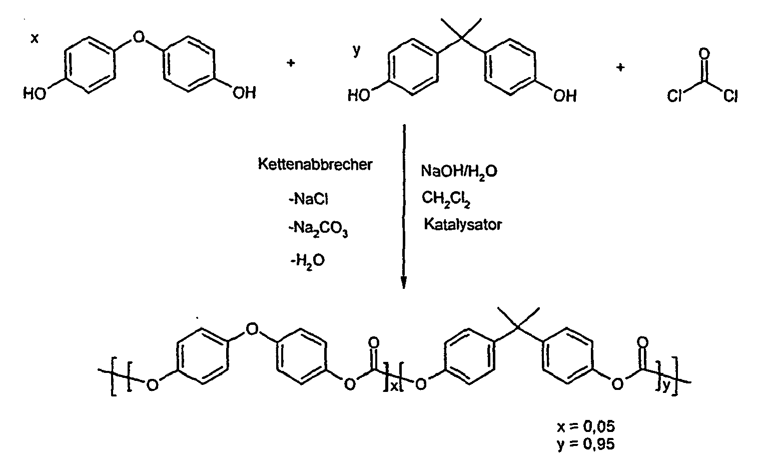

Zu einer mit Stickstoff inertisierten Lösung von 3903,9 g (17,1 mol) Bisphenol A, 182 g (0,9 mol) 4,4'-Dihydroxydiphenylether und 1584 g (39,6 mol) Natriumhydroxid in 31 Wasser werden 311 Methylenchlorid hinzugegeben. Bei einer einstufigen Fahrweise gibt man 108,14 g (0,72 mol bzw. 4 mol-% bzgl. Bisphenol A) p-tert.-Butylphenol (BUP) als Kettenabbrecher hinzu. Bei einem pH-Wert von 13,4 und 21°C gibt man im Verlauf von 1 Stunde und 20 Minuten 3560 g (36 mol) Phosgen hinzu. Um den pH-Wert nicht unter 12,6 fallen zu lassen, wurde während der Phosgenierung 25 %-ige Natronlauge zugegeben. Nach beendeter Phosgenierung und Spülung mit Stickstoff gibt man 24,7 ml (0,18 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 290°C über einen Ausdampfextruder extrudiert.

Man erhält 3732 g Polycarbonat (nach Verwerfen von Vorlauf).

### Analytik:

- relative Lösungsviskosität in Methylenchlorid bei einer Temperatur von 25°C (0,5 g/100 ml Lösung): 1,277
- Melt volume Rate (MVR) 300°C/1,2 kg: 12,4 ml/10 min
- IMVR¹⁾ 300°C/1,2 kg 20 : 12,4 ml/10 min
- Vicat VSTB 50: 151,7°C
- Streckspannung, Streckdehnung, Reißfestigkeit, Reißdehnung und E-Modul werden aus dem Zugversuch nach ISO 527 ermittelt.
   1) Das I bei IMVR steht für intrinsisch. IMVR beschreibt den MVR bei einer Aufheizzeit von 20 oder 30 min gegenüber 6 min nach der Norm ISO 1133 (Bezeichnung IMVR 20' oder IMVR 30') als Grenzwert gegenüber dem MVR nach ISO 1133.

### Beispiel 9

### Mechanische Eigenschaften des Copolycarbonates aus Beispiel 8:

| | |
|---|---|
| Kerbschlagzähigkeit ISO 180/4A RT [kJ/m²]: | 10x74z |
| Streckspannung: | 62 N/mm² |
| Streckdehnung: | 6,4 % |
| Reißfestigkeit: | 71 N/mm² |
| Reißdehnung: | 140 % |

| | |
|---|---|
| E-Modul: | 2227 N/mm² |

Zum Vergleich sind die mechanischen Eigenschaften von Polycarbonaten, wie Makrolon® 2405 und 2605 aufgeführt:

| Mechanik von Makrolon® | 2405 | 2605 |
|---|---|---|
| Kerbschlagzähigkeit ISO 180/4A RT [kJ/m²]: | 10x78z | 10x86z |
| Streckspannung: | 65 N/mm² | 66 N/mm² |
| Streckdehnung: | 6,2 % | 6,3 % |
| Reißfestigkeit: | 70 N/mM² | 75 N/mm² |
| Reißdehnung: | 141% | 144% |
| E-Modul: | 2348 N/mm² | 2384N/mm² |
| Vicat VSTB 50 | 144,9 °C | 143,4°C |

### Beispiel 10

### Synthese eines Copolycarbonats aus Bisphenol A / 4,4'-Dihydroxydiphenylether (Molverhältnis 90:10):

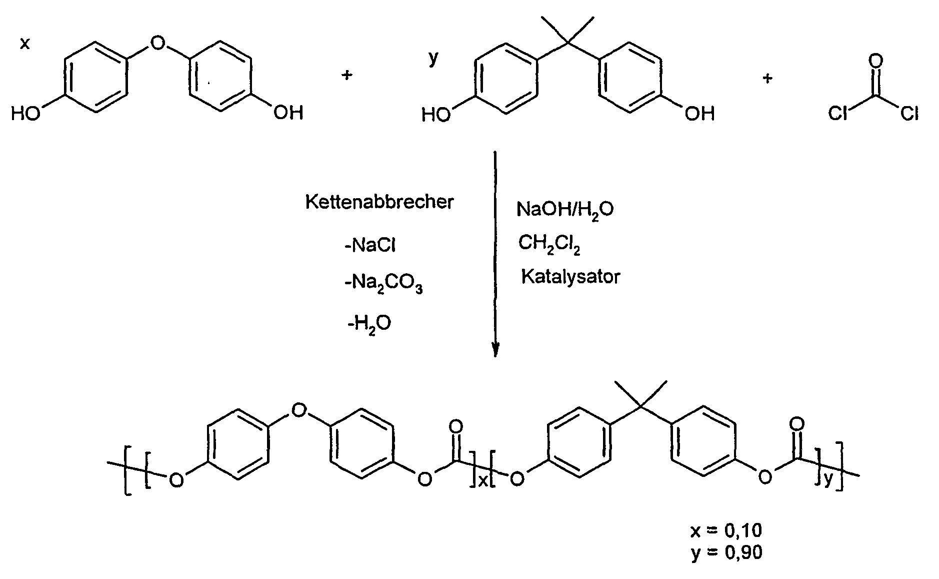

Zu einer mit Stickstoff inertisierten Lösung von 3698,5 g (16,2 mol) Bisphenol A, 364 g (1,8 mol) 4,4'-Dihydroxydiphenylether und 1584 g (39,6 mol) Natriumhydroxid in 31 1 Wasser werden 31 Methylenchlorid hinzugegeben. Bei einer einstufigen Fahrweise gibt man 108,14 g (0,72 mol bzw. 4 mol-% bzgl. Bisphenol A) p-tert.-Butylphenol (BUP) als Kettenabbrecher hinzu. Bei einem pH-Wert von 13,4 und 21°C gibt man im Verlauf von 1 Stunde und 20 Minuten 3560 g (36 mol) Phosgen hinzu. Um den pH-Wert nicht unter 12,6 fallen zu lassen, wurde während der Phosgenierung 25 %-ige Natronlauge zugegeben. Nach beendeter Phosgenierung und Spülung mit Stickstoff gibt man 24,7 ml (0,18 mol, 1 mol-% bzgl. Bisphenol A) N-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 290°C über einen Ausdampfextruder extrudiert.

### Analytik:

- relative Lösungsviskosität in Methylenchlorid bei 25°C (0,5 g/100 ml Lösung): 1,276
- MVR 300 °C/1,2 kg: 13,7 ml/10 min
- IMVR 300 °C/1,2 kg 20 ': 13,9 ml/10 min
- Vicat VSTB 50: 147,2°C

### Beispiel 11

### Mechanische Eigenschaften des Copolycarbonates aus Beispiel 10:

| | |
|---|---|
| Kerbschlagzähigkeit ISO 180/4A RT [kJ/m²]: | 10x74z |
| Kerbschlagzähigkeit ISO 180/4A -20°C [kJ/m²]: | 10x70z |
| Kerbschlagzähigkeit ISO 180/4A-30 °C [kJ/m²]: | 4x71z/6x17s |
| Kerbschlagzähigkeit ISO 180/4A -40 °C [kJ/m²]: | 10x16s |
| Streckspannung: | 62 N/mm² |
| Streckdehnung: | 6,4% |
| Reißfestigkeit: | 69 N/mm² |
| Reißdehnung: | 135% |
| E-Modul: | 2283 N/mm² |

Zum Vergleich sind die mechanischen Eigenschaften von Polycarbonaten, wie Makrolon® 2405 und 2605 aufgeführt:

| Mechanik von Makrolon^{®} | 2405 | 2605 |
|---|---|---|
| Kerbschlagzähigkeit ISO 180/4A RT [kJ/m²]: | 10x78z | 10x86z |
| Kerbschlagzähigkeit ISO 180/4A 10°C [kJ/m²]: | 7x74z/3x14s | 10x84z |
| Kerbschlagzähigkeit ISO 180/4A 0°C [kJ/m²]: | 10x14s | 10x19s |
| Streckspannung: | 65 N/mm² | 66 N/mm² |
| Streckdehnung: | 6,2 % | 6,3 % |
| Reißfestigkeit: | 70N/mm² | 75N/mm² |
| Reißdehnung: | 141% | 144% |
| E-Modul: | 2348 N/mm² | 2384N/mm² |
| Vicat VSTB 50 | 144,9°C | 143,4°C |

### Beispiel 12

Ermittlung der Viskosität als Funktion der Schergeschwindigkeit (ISO 11443).

Das in Beispiel 8 erhaltene Copolycarbonat wird bei 280 und 300°C rheologisch untersucht. Dabei werden folgende Daten erhalten:

| | Viskosität [Pas] | |
|---|---|---|
| Schergefälle [s⁻¹] | 280°C | 300°C |
| 50 | 641 | - |
| 100 | 635 | 286 |
| 500 | 513 | 264 |
| 1000 | 409 | 232 |
| 1500 | 336 | 206 |

### Beispiel 13

Ermittlung der Viskosität als Funktion der Schergeschwindigkeit (ISO 11443).

Das in Beispiel 10 erhaltene Copolycarbonat wird bei 280°C und 300°C rheologisch untersucht. Dabei werden folgende Daten erhalten:

| | Viskosität [Pas] | |
|---|---|---|
| Schergefälle [s⁻¹] | 280°C | 300°C |
| 50 | 609 | - |
| 100 | 609 | - |
| 500 | 499 | 288 |
| 1000 | 392 | 252 |
| 1500 | 323 | 222 |

### Beispiel 14

### Ermittlung der Viskosität als Funktion der Schergeschwindigkeit (ISO 11443).

Zum Vergleich sind die mechanischen Eigenschaften von Polycarbonaten, wie Makrolon® 2405 und 2605 aufgeführt:
Zum Vergleich wird bei 280°C und 300°C rheologisch untersucht. Dabei werden folgende Daten erhalten:
a) Makrolon® 2405 (relative Lösungsviskosität in Methylenchlorid bei 25°C (0,5 g/100 ml Lösung): 1,255):

| | Viskosität [Pas] | |
|---|---|---|
| Schergefälle [s⁻¹] | 280°C | 300°C |
| 50 | - | - |
| 100 | 457 | |
| 500 | 394 | 224 |
| 1000 | 322 | 198 |
| 1500 | 271 | 176 |

b) Makrolon 2605 (relative Lösungsviskosität in Methylenchlorid bei 25°C (0,5 g/100 ml Lösung): 1,276):

| | Viskosität [Pas] | |
|---|---|---|
| Schergefälle [s⁻¹] | 280°C | 300°C |
| 50 | 721 | - |
| 100 | 719 | 382 |
| 500 | 564 | 334 |
| 1000 | 434 | 282 |
| 1500 | 350 | 241 |

### Beispiel 15

### Ermittlung der Fließlänge mit einer Fließspirale.

Der Fließweg für das Vergleichsmaterial Makrolon® 2405 wurde mit 30 cm ermittelt und als Standard eingestellt.

| Polymer | Fließspirale [cm] | Eta rel |
|---|---|---|
| Makrolon 2405 | 30 | 1,255 |
| Makrolon 2605 | 25 | 1,277 |
| Copolycarbonat aus Beispiel 8 | 26 | 1,276 |
| Copolycarbonat aus Beispiel 10 | 26,5 | 1,276 |

Wie aus dem Vergleich der Fließwege zu ersehen, ist die Schmelzviskosität bei annähernd gleichem Molekulargewicht geringer. Somit fließen die erfindungsgemäßen Copolycarbonate aus Beispiel 8 und 10 leichter als das Vergleichsmaterial Makrolon® 2605 auf Basis von Bisphenol A.

### Beispiel 16

### Herstellung von 3-(3'-Methoxyphenyloxy)phenol

In einem Rundkolben mit aufgesetzter Vigreux-Kolonne, Rücklaufteiler und Kühler werden unter Argon 77,08 g (0,70 mol) Resorcin in 250 ml trockenem Pyridin gelöst. Zur Reaktionsmischung werden unter Rühren 84,3 g Natriummethylatlösung in Methanol (30% Lösung) hinzugetropft. Anschließend wird Methanol aus dem Reaktionsgemisch über Destillation entfernt. Danach wird der Rücklaufteiler geschlossen und man tropft 261,9 g (1.40 mol) 3-Bromanisol hinzu. Ferner werden 3,5 g (0.04 mol) CuCl hinzugegeben. Man lässt 6 Stunden unter Rückfluss kochen. Anschließend wird Pyridin über den geöffneten Rücklaufteiler abdestilliert. Dabei steigt die Sumpftemperatur auf 150°C. Dann lässt man abkühlen und rührt den Rückstand in 250 ml halbkonzentrierter Salzsäure auf. Das Gemisch wird mit 300 ml Toluol extrahiert. Man wäscht die organische Phase erst mit halbkonzentrierter Salzsäure, dann noch 2 x mit NaOH-Lösung (10%). Die vereinigten alkalischen Phasen werden mit verdünnter HCl angesäuert und mit einem Diethylether/Toluolgemisch (1:1) extrahiert. Nach Entfernen des Lösungsmittels erhält man 65,5 g eines braunen Öls.

¹H-NMR (400 MHz, CDCl₃) δ = 7.22-7.17 (m, 1 H), 7.15-7.1 (m, 1 H), 6.67-6.52 (m, 5 H), 5.52 (s, 1 H), 3.74 (s, 3 H).

### Beispiel 17

### Herstellung von 3,3'-Dihydroxydiphenylether

In einem Rundkolben werden 64 g (0,296 mol) 3-(3'-Methoxyphenyloxy)-phenol unter Argon mit 200 ml Bromwasserstoffsäure (48%) versetzt. Danach werden 350 ml Bromwasserstoffsäure (33%ige Lösung in Eisessig) hinzugegeben. Ferner werden 7,5 g (0.015 mol) Hexadecyltributylphosphoniumbromid zugefügt. Anschließend wird der Gasentwicklung angepasst auf 110°C erhitzt und gerührt. Nach beendeter Gasentwicklung wird unter Kühlung Wasser zugetropft. Der Ansatz wird 5 x mit Diethylether extrahiert. Die organische Phase wird 3 x mit je 150 ml 10 %iger Natronlauge geschüttelt. Diese alkalische Phase wird mit 25 %iger HCl-Lösung angesäuert und anschließend mehrmals mit Diethylether extrahiert. Die organische Phase wird mehrmals mit Wasser und abschließend mit gesättigter Kochsalz-Lösung gewaschen, über Magnesiumsulfat getrocknet und filtriert. Das Lösungsmittel wird im Vakuum entfernt. Der dunkelbraune, kristalline Rückstand wird in Chloroform unter Zugabe eines Gemischs aus Aktivkohle / Tonsil umkristallisiert. Man erhält 24,4 g eines gelben Feststoffs mit einem Schmelzpunkt von 92°C.
¹H-NMR (400 MHz, (CDCl₃) δ = 7.19-7.15 (m, 2 H), 6.56 (m, 4 H), 6.50-6.49 (m, 2 H), 4.95 (s, 2 H):

### Beispiel 18

### Herstellung von 3-Hydroxy-4'methoxydiphenylether

In einem 0,5 1 Rundkolben mit Rührapparatur und aufgesetzter Vigreuxkolonne und Destillationsbrücke werden 35,3 g (0,32 mol) Resorcin in 250 ml Pyridin unter Argon vorgelegt. Zu dieser Lösung werden 38,5 g (0,21 mol) Natriummetylat-Lösung (30 % in Methanol) gegeben und man erwärmt auf 60°C. Dann wird Methanol, anschließend ein Teil des Pyridins abdestilliert; dabei steigt die Temperatur auf 11°C. Zu dieser Lösung werden bei 50°C 120 g (0,64 mol) Brombenzol und danach 1,59 g Kupfer-(I)-chlorid zugegeben. Die Destillationsbrücke wird durch einen Rückflusskühler ersetzt und für 10 h unter Rückfluss erhitzt. Danach wird Pyridin abdestilliert, dabei steigt die Sumpftemperatur auf 150°C.

Man lässt abkühlen und rührt den Rückstand in 250 ml halbkonzentrierter Salzsäure auf. Man extrahiert mehrmals mit Toluol. Die vereinigten organischen Phasen werden erst mit halbkonzentrierter Salzsäure gewaschen und dann mehrfach mit NaOH Lösung (10%) extrahiert. Die vereinigten alkalischen Phasen werden mit einem Toluol/Diethylether-Gemisch (1:1) reextrahiert. Das Lösungsmittel wird im Vakuum entfernt. Das Rohprodukt wird über eine Kieselgelsäule gegeben (Laufmittel: n-Hexan/Ethylacetat 1:1). Nach Entfernen des Lösungsmittels wird das Produkt im Vakuum getrocknet und erhält 26 g eines gelben Öls.

¹H-NMR (400 MHz, (CDCl₃) δ = 7.09-7.06 (m, 1 H), 6.95-6.91 (m, 2 H), 6.85-6.80 (m, 2 H), 6.49-6.46 (m, 2 H), 6,42-6.40 (m, 1 H), 6.16 (s, 1 H), 3,74 (s, 3 H).

### Beispiel 19

### Herstellung von 3,4'-Dihydroxydiphenylether

23,8 g 3-Hydroxy-4'-methoxydiphenylether werden unter Argon in einem Gemisch aus 100 ml Bromwasserstoffsäure (48 % Lösung) und 230 ml Bromwasserstoff in Eisessig (33 % Lösung) gelöst und der Gasentwicklung angepasst zum Rückfluss erhitzt Nach insgesamt 6 Stunden werden unter Kühlung 300 ml Wasser zugetropft. Der Ansatz wird mehrmals mit Diethylether extrahiert. Die organische Phase wird 5 x mit Wasser und 1 x mit gesättigter Kochsalz-Lösung gewaschen, anschließend 3 x mit 10%iger Natronlauge extrahiert.

Die alkalische Phase wird angesäuert und anschließend mehrmals mit Diethylether extrahiert. Die organische Phase wird mehrmals mit Wasser und abschließend mit gesättigter Kochsalz-Lösung gewaschen, über Magnesiumsulfat getrocknet, filtriert und im Vakuum eingeengt. Man erhält 22,7 g eines ockerfarbenen Feststoffs, der über eine Glasfilternutsche, gefüllt mit 5 cm Kieselgel 60 (0,063-0,20 mm), gegeben wird (Laufmittel: n-Hexan/Ethylacetat 3:1). Das Lösungsmittel wird im Vakuumentfernt und das Produkt im Vakuum getrocknet. Man erhält 13,0 g eines hellen Feststoffs.

¹H-NMR (400 MHz, (CD₃)₂SO) δ = 7.09-7.06 (m, 1 H), 6.88-6.85 (m, 2 H), 6.78-6.75 (m, 2 H), 6.44-6.40 (m, 1 H), 6,32-6.29 (m, 1 H), 6.26-6.24 (m, 1 H).

### Beispiel 20

### Herstellung von 1,3-Bis(4-methoxyphenoxy)benzol

In einem 2 1-Rundkolben mit 10 cm-Vigreux-Kolonne, Rücklaufteiler (Kolonnenkopf) und aufgesetztem Rückflusskühler werden unter Argon 400 ml Toluol und 88,3 g (0.49 mol) Natriummethylatlösung (30 % in Methanol) vorgelegt. Zu dieser Lösung werden 27,5 g (0.25 mol) Resorcin gegeben. Über den geöffneten Rücklaufteiler werden Methanol und Toluol abdestilliert. Der zurückbleibende Feststoff wird bei 110°C mit 500 ml Pyridin versetzt. Dann werden bei ca. 35°C 187 g (1.0 mol) p-Bromanisol zügig hinzugetropft und anschließend 7,5 g (0.08 mol) Kupfer(I)chlorid hinzugegeben. Man erhitzt zum Rückfluss und lässt noch weitere 9 Stunden rühren.

Man lässt Abkühlen und gibt 600 ml Wasser hinzu. Dann wird mit ca. 25 %iger HCl-Lösung angesäuert und 2 x mit je 250 ml n-Hexan und 2 x mit je 250 ml Diethylether extrahiert. Die vereinigten organischen Phasen werden über Magnesiumsulfat getrocknet. Das Lösungsmittel wird im Vakuum entfernt. Das Rohprodukt wird über Kieselgel mit n-Hexan als Eluent filtriert. Das Lösungsmittel wird im Vakuum entfernt und im Produkt enthaltenes Bromanisol abdestilliert. Es verbleiben 22.5 g in Form weißer Kristalle.

¹H-NMR (400 MHz, CDCl₃) δ = 7.19-7.13 (m, 1 H), 6.99-6.96 (m, 4 H), 6.89-6.85 (m, 4 H), 6.60-6.57 (m, 3 H), 3.79 (s, 6 H).

### Beispiel 21

### Herstellung von 4,4'-[1,3-phenylenbis(oxy)]diphenol

22 g der oben beschriebenen Verbindung aus Beispiel 20 werden unter Argon in einem Gemisch aus 60 ml Bromwasserstoffsäure (48% Lösung) und 150 ml Bromwasserstoff in Eisessig (33 % Lösung) gelöst und der Gasentwicklung angepasst zum Rückfluss erhitzt. Nach insgesamt 5 Stunden werden unter Kühlung 300 ml Wasser zugetropft. Der Ansatz wird mehrmals mit insgesamt 400 ml Diethylether extrahiert. Die vereinigten organischen Phasen werden 4 x mit je 400 ml Wasser waschen, über Magnesiumsulfat getrocknet und filtriert. Das Lösungsmittel wird im Vakuum entfernt. Man erhält 20,5 g eines kristallinen Feststoffs, welcher über eine Säule mit Kieselgel (0,063-0,20 mm) gereinigt wurde (Laufmittel: n-Hexan/Ethylacetat 3:1). Das Lösungsmittel wird entfernt und das Produkt im Vakuum getrocknet. Man erhält 15,8 g eines beigen Feststoffs.

¹H-NMR (400 MHz, CDCl₃) δ = 9.31 (s, 2 H), 7.25-7.20 (m, 1 H), 6.90-6.86 (m, 4 H), 6.79-6.75 (m, 4 H), 6.54-6.50 (m, 2 H), 6.39-6.37 (m, 1 H).

### Beispiel 22

### Herstellung eines erfindungsgemäßen Polycarbonats

In einem Kolben werden bei Raumtemperatur 15,18 g (0,0665 mol) 2,2-Bis-(4-hydroxyphenyl)-propan und 0,708 g (3,5 mmol) 3,3'-Dihydroxydiphenylether in einer Mischung aus 6,16 g NaOH (220 mol-%, bezogen auf gesamte Bisphenol-Komponente) in 250 ml Wasser unter Stickstoffatmosphäre gelöst. Man gibt 250 ml Dichlormethan hinzu und lässt für 5 Minuten Rühren. Zu diesem Gemisch werden 0,26 g (4 mol-%, bezogen auf gesamte Bisphenol-Komponente) Phenol gelöst in 30 ml Dichlormethan gegeben. Bei Raumtemperatur (20-25°C) und unter kräftigem Rühren werden 13,85 g (200 mol%, bezogen auf Bisphenol-Komponente) Phosgen eingeleitet.

Der pH-Wert wird dabei durch Nachdosieren von 25 %iger NaOH-Lösung im Bereich von pH = 12.5-13,5 gehalten. Nach beendeter Einleitung wird die Apparatur 5 Minuten mit Stickstoff gespült. Nach weiteren 5 Minuten gibt man zum Reaktionsgemisch 0,0961 g (1 mol-%) *N-*Ethylpiperidin. Man lässt noch 60 Minuten Rühren. Daraufhin wird mit Dichlormethan verdünnt und die organische Phase abgetrennt. Nach Waschen der organischen Phase mit gleichem Volumen an 10 %iger Phosphorsäure wird die organische Phase abgetrennt und noch mit Wasser gewaschen bis die Leitfähigkeit der wässrigen Phase < 15µS erreicht. Das Lösungsmittel wird zu 2/3 im Vakuum entfernt, die viskose Lösung im Vakuumtrockenschrank bei 80°C vollständig getrocknet Ausbeute: 18,2 g.

### Beispiel 23

Dieses Beispiel entspricht Beispiel 22 außer dass statt 3,3'-Dihydroxydiphenylether das Monomer aus Beispiel 19 verwendet wurde.

### Beispiel 24

Dieses Beispiel entspricht Beispiel 22 außer dass statt 3,3'-Dihydroxydiphenylether das Monomer aus Beispiel 21 verwendet wurde.

| **Nr.** | | **BPA / Monomer (Molverhältnis)** | **Mw** | **T_{g}** | **Nullviskosität¹⁾ 270 °C** |
|---|---|---|---|---|---|
| 22 | 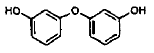 | 95/5 | 31.100 | 141 °C | 1210 Pa s |
| 23 | 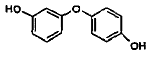 | 95/5 | 29.500 | 145 °C | 950 Pa s |
| 24 | 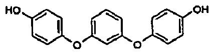 | 95/5 | 27.200 | 142 °C | 670 Pa s |
| | Makrolon® 3108 | 100/0 | 32.000 | 148 °C | 2300 Pa s |
| | Makrolon® 2800 | 100/0 | 28.600 | 148 °C | 1550 Pa s |
| | Makrolon® 2600 | 100/0 | 26.800 | 148 °C | 1300 Pa s |

| | | | | | |
|---|---|---|---|---|---|
| ¹) Die Nullviskosiät ist dabei die Grenzviskosität bei einer auf eine Scherate von Null extrapolierten Viskosität. | | | | | |

### Analytik:

Die relative Lösungsviskosität wird Dichlormethan bei einer Konzentration von 5 g/l bei 25°C bestimmt.

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

Die Farbzahl wurde als Differenz der Extinktion bei 420 nm und 700 nm in Dichlormethan bei einer Konzentration von 2,4 g/50 ml und einer Schichtdicke von 10 cm ermittelt.

### Beispiel 25

In einem 500 ml Dreihalskolben mit Rührer, Innenthermometer und Vigreuxkolonne (30 cm, verspiegelt) mit Brücke werden 41,09 g (0,18 mol) Bisphenol A, 4,04 g (0,02 mol) 4,4'-Dihydroxydiphenylether (umkristallisiert), 44,99 g (0,21 mol) Diphenylcarbonat und 0,0691 g (4 x 10⁻³ mol %) 5 %ige Phenollösung von Tetraphenylphosphoniumphenolat bezogen auf Bisphenol A eingewogen. Die Apparatur wird durch Anlegen von Vakuum und Spülen mit Stickstoff (dreimal) vom Luftsauerstoff befreit und das Gemisch bei 190°C aufgeschmolzen und entstehendes Phenol abdestilliert. Nun wird ein Vakuum von 100 mbar angelegt und weitere 20 Minuten destilliert. Dann wird die Temperatur auf 235°C erhöht und 15 Minuten das entstehende Phenol abdestilliert. Daraufhin wird innerhalb von 5 Minuten das Vakuum auf 60 mbar eingestellt und 15 Minuten gehalten. Man erhitzt auf 250°C und hält das Plateau 15 Minuten. Dann reduziert man den Druck auf 5 mbar für 15 Minuten, woraufhin man auf 280°C erhitzt. Nach wiederum 15 Minuten wird das Vakuum auf 0,5 mbar reduziert und weitere 15 Minuten gerührt. Darauf erhitzt man auf 300°C und hält 30 min. Nun wird das Polycarbonat bei Normaldruck unter Stickstoffatmosphäre gezogen.
ηrel: 1,247
Phen. OH : 770 ppm
Tg: 144 °C

### Beispiel 26

In einem 500 ml Dreihalskolben mit Rührer, Innenthermometer und Vigreuxkolonne (30 cm, verspiegelt) mit Brücke werden 43,38 g (0,19 mol) Bisphenol A, 2,02 g (0,01 mol) 4,4'-Dihydroxydiphenylether (umkristallisiert), 44,99 g (0,21 mol) Diphenylcarbonat und 0,0691 g (4 x 10⁻³ mol %) 5 %ige Phenollösung von Tetraphenylphosphoniumphenolat bezogen auf Bisphenol A eingewogen. Die Apparatur wird durch Anlegen von Vakuum und Spülen mit Stickstoff (dreimal) vom Luftsauerstoff befreit und das Gemisch bei 190°C aufgeschmolzen und entstehendes Phenol abdestilliert. Nun wird ein Vakuum von 100 mbar angelegt und weitere 20 Minuten destilliert. Dann wird die Temperatur auf 235°C erhöht und 15 Minuten das entstehende Phenol abdestilliert. Daraufhin wird innerhalb von 5 Minuten das Vakuum auf 60 mbar eingestellt und 15 Minuten gehalten. Man erhitzt auf 250°C und hält das Plateau 15 Minuten. Dann reduziert man den Druck auf 5 mbar für 15 Minuten, woraufhin man auf 280°C erhitzt. Nach wiederum 15 Minuten wird das Vakuum auf 0,5 mbar reduziert und weitere 15 Minuten gerührt. Darauf erhitzt man auf 300°C und hält 30 min. Nun wird das Polycarbonat bei Normaldruck unter Stickstoffatmosphäre gezogen.
ηrel: 1,229
Phen. OH : 450 ppm
Tg : 143°C
Farbzahl: 0,59

### Beispiel 27

In einem 500 ml Dreihalskolben mit Rührer, Innenthermometer und Vigreuxkolonne (30 cm, verspiegelt) mit Brücke werden 31,96 g (0,14 mol) Bisphenol A, 13,10 g (0,06 mol) Bis-(4-hydroxyphenyl)sulfid, 46,70 g (0,22 mol) Diphenylcarbonat und 0,0691 g (4 x 10⁻³ mol %) 5 %ige Phenollösung von Tetraphenylphosphoniumphenolat bezogen auf Bisphenol A eingewogen. Die Apparatur wird durch Anlegen von Vakuum und Spülen mit Stickstoff (dreimal) vom Luftsauerstoff befreit und das Gemisch bei 190°C aufgeschmolzen und entstehendes Phenol 30 min abdestilliert. Nun wird innerhalb von 10 Minuten die Temperatur auf 235°C erhöht und das entstehende Phenol dabei abdestilliert. Daraufhin wird innerhalb von 10 Minuten auf 300°C erhitzt und der Druck gleichzeitig auf 60 mbar reduziert. In den folgenden 10 Minuten wird das Vakuum auf 5 mbar reduziert, danach in weiteren 10 min auf 0,5 mbar. Nach 30 min wird das Polycarbonat bei Normaldruck unter Stickstoffatmosphäre gezogen.
ηrel:: 1,294
Phen. OH : 760 ppm

**Thiobisphenol - CoPC**

| | Mol% BPA | Mol%BPS | ηrel | % OH |
|---|---|---|---|---|
| | 0 | 100 | unlöslich | unlöslich |
| | 70 | 30 | 1,294 | 0,076 |
| | 50 | 50 | 1,329 | 0,063 |
| | 50 | 50 | 1,252 | 0,12 |
| | 25 | 75 | 1,225 | 0,14 |
| | 25 | 75 | 1,366 | 0,048 |

## Patentansprüche

1. Formteil ausgewählt aus Sicherkeitsscheibe, Platte, Mobiltelefongehäuse, Wasserflasche, Stoßfänger Scheinwerferlampen Streulichtscheiben erhältlich aus Copolycarbonaten enthaltend mindestens zwei verschiedene Bisphenole als Monomere, wobei ein Bisphenol ausgewählt ist aus mindestens einer der Verbindungen der Formel (1), 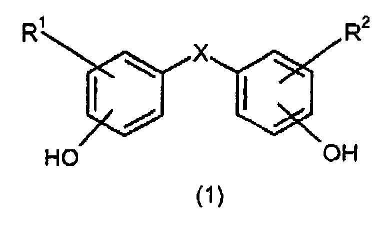 in welcher
R¹ und R² unabhängig voneinander für Wasserstoff oder lineares oder verzweigtes C₁-C₁₀-Alkyl, und
X für O oder S steht.

2. Formteil gemäß Anspruch 1 erhältlich aus Copolycarbonaten, enthaltend mindestens ein Bisphenol ausgewählt aus Verbindungen der Formeln (1 a) und (1b) 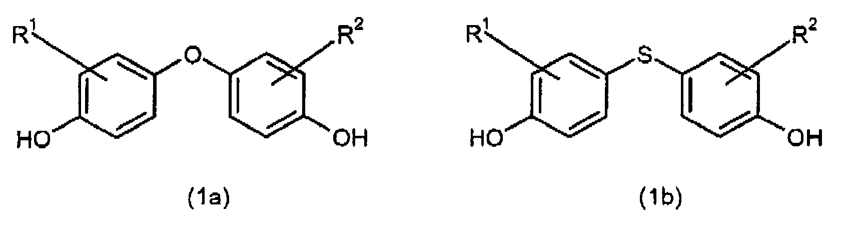 in welchen
R¹ und R² die in Anspruch 1 genannte Bedeutung haben.

3. Formteil gemäß Anspruch 1 erhältlich aus Copolycarbonaten, enthaltend mindestens ein Bisphenol ausgewählt aus Verbindungen der Formeln (1c) und (1d)

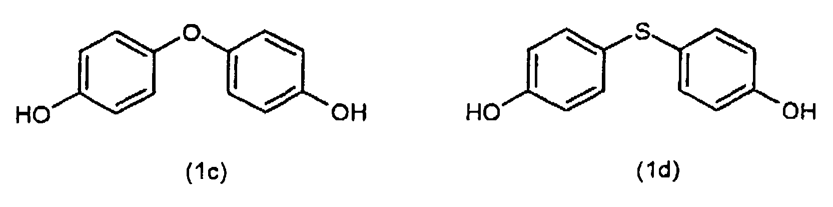

4. Formteil gemäß Anspruch 1, wobei das Copolycarbonat 0,1 bis 40 mol-% Bisphenole der Formel (1) enthält.

5. Formteil gemäß Anspmch 4, wobei das Copolycarbonat 1 bis 30 mol-% Bisphenole der Formel (1) enthält.

6. Formteil gemäß Anspruch 5, wobei das Copolycarbonat 10 bis 20 mol-% Bisphenole der Formel (1) enthält.

7. Autoscheibe gemäß einem der vorhergehenden Ansprüche.

## Claims

1. Moulding selected from safety glazing, sheet, mobile telephone casing, water bottle, bumper, headlight lamps, headlight lenses, obtainable from copolycarbonates containing at least two different bisphenols as monomers, one bisphenol being selected from at least one of the compounds of formula (1) 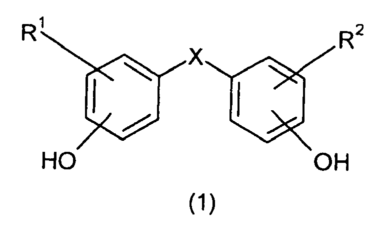 in which
R¹ and R² each independently of the other represents hydrogen or linear or branched C₁-C₁₀-alkyl, and
X represents O or S.

2. Moulding according to claim 1 obtainable from copolycarbonates containing at least one bisphenol selected from compounds of formulae (1a) and (1b) 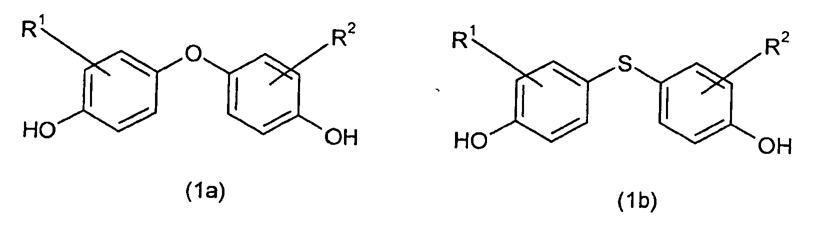 in which
R¹ and R² are as defined in claim 1.

3. Moulding according to claim 1 obtainable from copolycarbonates containing at least one bisphenol selected from compounds of formulae (1c) and (1d)

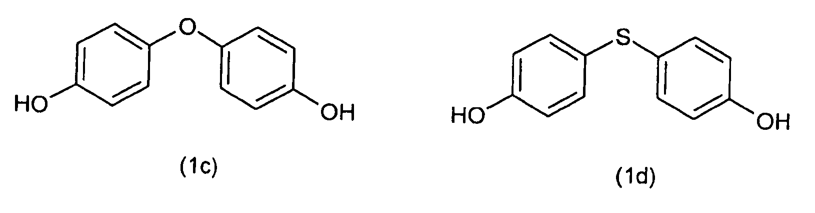

4. Moulding according to claim 1, wherein the copolycarbonate contains from 0.1 to 40 mol% bisphenols of formula (1).

5. Moulding according to claim 4, wherein the copolycarbonate contains from 1 to 30 mol% bisphenols of formula (1).

6. Moulding according to claim 5, wherein the copolycarbonate contains from 10 to 20 mol% bisphenols of formula (1).

7. Motor vehicle window according to any one of the preceding claims.

## Revendications

1. Pièce moulée, choisie parmi une vitre de sécurité, une plaque, un boîtier de téléphone mobile, une bouteille d'eau, un pare-chocs, une ampoule de phare, une vitre diffusante, qui peut être obtenue à partir de copolycarbonates contenant au moins deux bisphénols différents comme monomères, un bisphénol étant choisi parmi l'un au moins des composés de formule (1) : 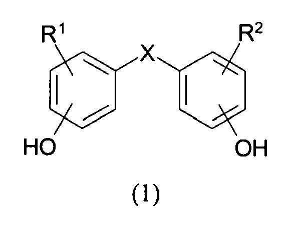 dans laquelle
R¹ et R² représentent indépendamment l'un de l'autre l'hydrogène ou un alkyle en C₁ à C₁₀ linéaire ou ramifié, et
V est O ou S.

2. Pièce moulée selon la revendication 1, qui peut être obtenue à partir de copolycarbonates contenant au moins un bisphénol choisi parmi des composés de formules (la) et (1b) : 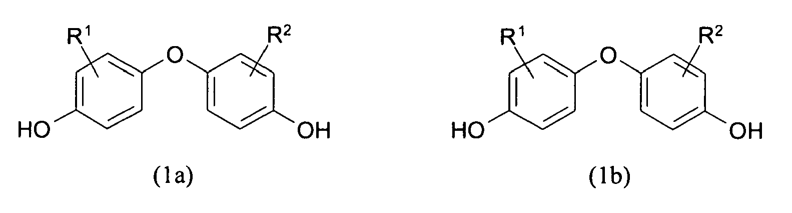 dans lesquelles R¹ et R² ont les significations indiquées dans la revendication 1.

3. Pièce moulée selon la revendication 1, qui peut être obtenue à partir de copolycarbonates contenant au moins un bisphénol choisi parmi des composés de formules (1c) et (1d) :

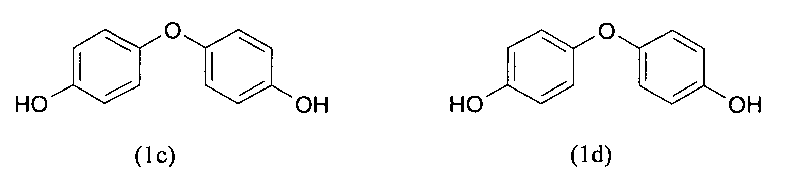

4. Pièce moulée selon la revendication 1, dans laquelle le copolycarbonate contient de 0,1 à 40% en moles de bisphénols de formule (1).

5. Pièce moulée selon la revendication 4, dans laquelle le copolycarbonate contient de 1 à 30% en moles de bisphénols de formule (1).

6. Pièce moulée selon la revendication 5, dans laquelle le copolycarbonate contient de 10 à 20% en moles de bisphénols de formule (1).

7. Vitre pour automobiles selon l'une des revendications précédentes.
